# EUROPÄISCHE PATENTSCHRIFT

(11) **EP 0 479 401 B1**
(45) Veröffentlichungstag und Bekanntmachung des Hinweises auf die Patenterteilung: **10.08.1994**
(21) Anmeldenummer: 91250265.5
(22) Anmeldetag: 01.10.1991
(51) Int. Cl.: B60J 5/04, B60R 19/42

(54) **Aufprallträger**
Impact beam
Poutre de choc

(30) Priorität: 04.10.1990 DE 4031679; 30.09.1991 DE 4133144
(43) Veröffentlichungstag der Anmeldung: 08.04.1992
(73) Patentinhaber: MANNESMANN Aktiengesellschaft, 40027 Düsseldorf (DE)
(72) Erfinder: Zichner, Roland, Dipl.-Ing., W-8722 Obereuerheim (DE); Janssen, Manfred, Dr.-Ing., W-4150 Krefeld (DE); Hoffmann, Ulrich, Dipl.-Ing., W-4100 Duisburg (DE)
(74) Vertreter: Meissner, Peter E., Dipl.-Ing.

(56) Entgegenhaltungen:
- EP-A- 0 266 084
- DE-A- 3 606 024
- DE-C- 3 728 778
- US-A- 3 829 149
- US-A- 4 708 390
- US-A- 4 861 097

## Beschreibung

Die Erfindung betrifft einen Aufprallträger für die Verstärkung der Tür eines Kraftfahrzeuges gemäß dem Gattungsbegriff des Patentanspruches 1.

Aufprallträger dienen zur Sicherung des Fahrgastraumes eines Personenkraftwagens, indem sie die gesamte Türkonstruktion versteifen und damit Verformungsarbeit aufnehmen können. Unter dem Gesichtspunkt der Bemühungen um Senkung des Kraftstoffverbrauches gibt es eine Vielzahl von Vorschlägen, um dieses zusätzliche Teil möglichst leicht zu machen bei gleichzeitiger Gewährleistung der geforderten Sicherheit.

Ein Lösungsvorschlag ist der DE-OS 36 06 024 zu entnehmen, bei dem ein aus einer Leichtmetallegierung hergestelltes Hohlprofil mit im wesentlichen quadratischen Querschnitt, das an den Ecken mit Wulstabschnitten versehen ist, als Aufprallträger in der Fahrzeugtür angeordnet ist. Dieses Profil hat den Nachteil, daß es wegen seiner großen Einbautiefe nicht für schmale Fahrzeugtüren geeignet ist. Außerdem sind die Werkzeugkosten für ein solches Strangpreßprofil hoch, da jede Abänderung des Profils ein neues Werkzeug erfordert. Des weiteren muß durch die geringe Festigkeit einer Leichtmetallegierung zur Aufnahme der Aufprallenergie die Wanddicke sehr groß gewählt werden, so daß der Vorteil der Verwendung eines spezifisch leichteren Werkstoffes weitgehend wieder verloren geht.

Eine andere Konstruktion des Aufprallträgers ist der US-PS 3,829,149 entnehmbar. Aus zwei profilierten Blechteilen wird ein Hohlprofilkasten gebildet, der einen rechteckigen Querschnitt aufweist und dessen Höhe immer größer ist als die Tiefe. Der Innenraum des Hohlprofiles wird mit einem separat gefertigten Kunststoffelement gefüllt und der Aufprallträger so in der Kraftfahrzeugtür befestigt, daß die Tiefe des Hohlprofils parallel zur Stoßrichtung liegt. Nachteilig bei diesem Vorschlag ist, daß durch den mehrteiligen Zusammenbau des Aufprallträgers die maximale Belastbarkeit durch die Nahtstellen bestimmt wird. Weiterhin ist die Anpaßbarkeit an unterschiedliche Türkonstruktionen gering und die Taktzeit zur Herstellung eines solchen Aufprallträgers vergleichbar lang, so daß die Herstellkosten entsprechend hoch liegen.

In der DE-C-3 728 778 ist ein Aufprallträger für die Verstärkung der Tür eines Kraftfahrzeuges, insbesondere eines Personenkraftwagens beschrieben, der als Hohlprofilteil beidends in der Fahrzeugtür festlegbar ist und der mindestens im mittleren Bereich einen Abschnitt aufweist, dessen Höheimmer größer ist als die Tiefe und der so in der Kraftfahrzeugtür angeordnet ist, daß die Tiefe parallel zur Stoßrichtung liegt, wobei ausgehend von einem Rohr das Hohlprofilteil als ein eine hohe Festigkeit, Zähigkeit und Verformungsarbeit aufweisendes einteiliges Stahlprofil (22) ausgebildet ist.

Aufgabe der Erfindung ist es, einen Aufprallträger zu schaffen, welcher bei geringem Gewicht und geringer Einbautiefe sowie kostengünstiger Herstellung die gestellten Anforderungen an einen Aufprallträger erfüllt, in einfacher und kostengünstiger Weise an verschiedene Türkonstruktionen anpaßbar ist und die Einknickgefahr auf ein Minimum beschränkt.

Diese Aufgabe wird mit den im Anspruch 1 angegebenen Merkmalen gelöst. Vorteilhafte Weiterbildungen sind in den Unteransprüchen festgelegt.

Es sind Bestrebungen in der Automobilindustrie bekannt geworden, Aufprallträger auch in Kleinwagen mit sehr schmalen Türen, d. h. Türen mit geringer Einbautiefe anzuordnen. Dies bedeutet, daß die bisher im Hinblick auf ein möglichst großes Trägheitsmoment breiten Aufprallträger hier nicht zur Anwendung kommen können. Zur Lösung des Problems ist es bekannt, ausgehend von einem Rohr ein einteiliges Stahlprofil mit hoher Festigkeit, Zähigkeit und Verformungsarbeit zu verwenden, um die geforderten Abnahmewerte zu erfüllen. Um ein Einknicken des Profils zu verhindern, kann man entweder die Wanddicke des Profiles gezielt erhöhen oder wie nach einem weiteren Merkmal der Erfindung offenbart, den Innenraum des Profils über eine bestimmte Länge mit einem geeigneten Material ausfüllen. Ein solches Material kann beispielsweise eine Kunststoffmischung sein, wie aus der US-PS 4,861,097 bereits bekannt ist. Füllungen anderer Art können beispielsweise Stücke aus Stahl, Gummi, Leichtmetall, Metallschaum oder Holz sein. Das letztgenannte Füllmittel ist dann besonders wirksam, wenn es aus verleimten Schichten besteht, wobei die Schichten parallel zur Stoßrichtung liegen.

Die Endbereiche des Profiles können im Sinne einer einfachen Befestigung in bekannter Weise entweder warm umgeformt oder im Sinne einer weiteren Gewichtseinsparung schräg abgefräst bzw. abgeschnitten werden.

Erfindungsgemäß weist mindestens eine der nahezu senkrecht zur Stoßrichtung liegenden Seiten des Profils eine dickere Wand auf, als die in Stoßrichtung liegenden Seiten.
Dabei besitzt die Seitenfläche mit der dickeren Wand im Querschnitt eine nach innen gerichtete Kontur. Dies ist mittels geeigneter Herstellungsverfahren zu erreichen.
Die eine dickere Wand aufweisende Seitenfläche kann auf der Außenseite oder auf der dem Fahrgastraum zugewandten Seite liegen. Wünschenswert kann es unter Umständen sein, beide senkrecht zur Stoßrichtung liegenden Seitenflächen mit einer dickeren Wand zu versehen.

Eine vergleichbare Wirkung kann man auch dann erzielen, wenn man für den mittleren Bereich einen oval geformten Querschnitt vorsieht. Um eine größere Fläche der Fahrzeugtür abzudecken wird weiterhin vorgeschlagen, den in Stoßrichtung liegenden Bereich des ovalen Querschnittes mit einem geraden Abschnitt zu versehen. Die Herstellung eines ovalen Querschnittes kann in der Weise erfolgen, daß das Ausgangsrohr kalt oder warm gepreßt wird. Eine andere Möglichkeit besteht darin, im Zuge der Herstellung des Rohres in den letzten Kalibern des Walzgerüstes den gewünschten ovalen Querschnitt kontinuierlich anzuformen. In diesem Fall werden nach dem Trennen in vorgegebenen Längen die Endenbereiche je nach Befestigungsart entsprechend umgeformt.

Der Vorteil des vorgeschlagenen Aufprallträgers ist darin zu sehen, daß durch die einteilige Form und die Verwendung eines hochfesten und zähen Stahls die Belastbarkeit bei geringer Wanddicke und geringer Einbautiefe sehr groß ist. Der vorgeschlagene ovale Querschnitt ist im Vergleich zu einem kreisrunden Querschnitt von Vorteil hinsichtlich des Gewichtes bei gleicher Einbautiefe. Es kann bis zu 20 % an Gewicht gespart werden, ohne daß hinsichtlich der Belastbarkeit Abstriche gemacht werden müssen. Alternativ kann die Belastbarkeit erheblich gesteigert werden, wenn man gleiches Gewicht sowohl für den kreisrunden als auch den ovalen Querschnitt zugrundelegt. Das Profil kann in einfacher Weise z.B. durch Einpressungen oder Kröpfungen an bestehende Fahrzeugtürkonstruktionen angepaßt werden.

In der Zeichnung wird anhand von Ausführungsbeispielen der erfindungsgemäße Aufprallträger näher erläutert.

Es zeigen:
- Figur 1: eine Längsansicht mit einem Aufriß eines Aufprallträgers
- Figur 2: einen Schnitt entlang der Linie A-A in Fig. 1
- Figur 3: eine Vorderansicht des Endbereiches eines erfindungsgemäßen Aufprallträgers
- Figur 4: eine Draufsicht des Endbereiches
- Figur 5: einen Schnitt entlang der Linie B-B in Fig. 3
- Figur 6: eine Vorderansicht eines anderen Ausführungsbeispieles
- Figur 7: einen Schnitt entlang der Linie A-A in Fig. 6
- Figur 8: wie Figur 7, jedoch mit einem modifizierten Querschnitt

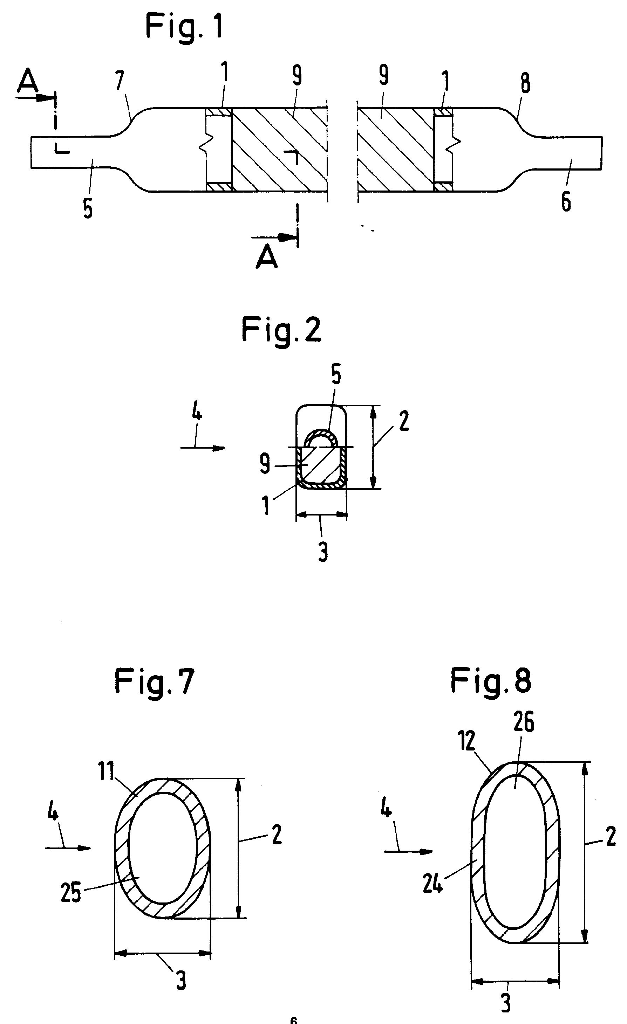

In Figur 1 ist in einer Längsansicht und in einem Aufriß sowie in Figur 2 in einem Schnitt entlang der Linie A-A in Fig. 1 ein Ausführungsbeispiel eines Aufprallträgers dargestellt. Dieser weist einen rechteckigen Querschnitt 1 auf, dessen Höhe 2 mindestens zweimal so groß ist wie die Tiefe 3. Dabei liegt die Tiefe 3 parallel zur Stoßrichtung 4 und die Höhe 2 senkrecht dazu. Bei diesem Ausführungsbeispiel wurde ein Rohr als Ausgangsform verwendet, das mittels einer hydraulischen Umformung in einen rechteckigen Querschnitt 1 umgeformt wurde.

Die Endbereiche 5,6 weisen weiterhin einen rohrförmigen Querschnitt auf mit Übergangsbereichen 7,8 zum rechteckigen Querschnitt 1. Die bereits bekannten Anpassungen der Rohrendenbereiche 5,6 an die Befestigungsmöglichkeiten in der jeweiligen Kraftfahrzeugtür sind hier nicht dargestellt.

Zur Erhöhung des Trägheitsmomentes und der Steifigkeit insgesamt ist der Innenraum des rechteckigen Querschnittes 1 mit einem ein niedriges spezifisches Gewicht aufweisenden Material 9 ausgefüllt. In der vorhergehenden Beschreibung ist auf die unterschiedlichsten Materialien hingewiesen worden, die für eine solche Füllung geeignet sind. Um den Füllvorgang zu erleichtern, wird eine Seite des Aufprallträgers im Bereich des Beginns des rechteckigen Querschnittes 1 abgetrennt und nach dem Füllen dieser Bereich kalt oder warm im Hinblick auf die Befestigung in der Kraftfahrzeugtür umgeformt. Eine andere Möglichkeit besteht darin, das kastenartige Hohlprofil separat herzustellen und nach dem Füllen des Innenraumes des Hohlprofiles die Befestigungsstücke, wie auch immer sie aussehen mögen, an das Profil mit dem rechteckigen Querschnitt 1 anzuschweißen.

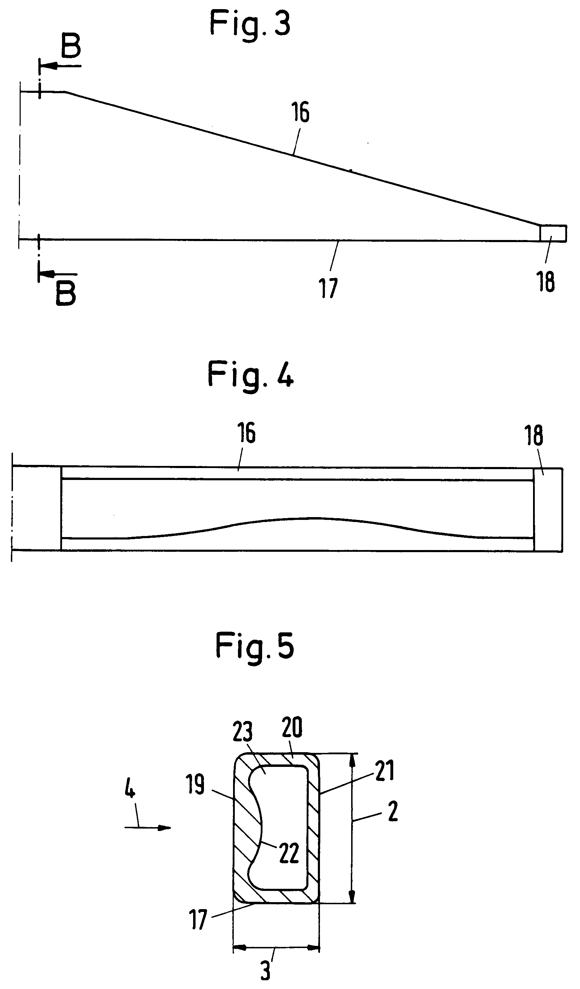

Figur 3 zeigt eine Vorderansicht und Figur 4 eine Draufsicht des Endbereiches eines erfindungsgemäßen Aufprallträges. In diesem hier gezeigten Ausführungsbeispiel erstreckt sich im Gegensatz zu der in Fig. 1 gezeigten Ausführung das kastenartige Profil bis in den Befestigungsbereich. Zur Gewichtseinsparung weist der Endbereich eine flach verlaufende Schräge 16 auf, die durch Schneiden oder Fräsen hergestellt ist. Diese Schräge 16 endet auf der unteren schmalen Seitenfläche 17. Damit man den Aufprallträger in einfacher Weise an der Fahrzeugtür befestigen kann, läßt man am Ende der Schräge einen Lappen 18 stehen, durch den man einen Bolzen oder eine Schraube stecken kann.

Figur 5 zeigt einen Schnitt des Aufprallträgers entlang der Linie B-B in Fig.3 . Abweichend von der Ausführung in Fig. 1 weist eine senkrecht zur Stoßrichtung 4 liegende Seitenfläche 19 eine dickere Wand auf im Vergleich zu den anderen Seitenflächen 17, 20, 21. Alternativ könnte auch die gegenüberliegende Seitenfläche 21 oder beide 19, 21 in der Wand dicker sein. Im Hinblick auf die Einknickgefahr des Aufprallträgers weist die Seitenfläche 19 mit der dickeren Wand eine nach innen gerichtete Kontur 22 auf. Damit wird der kritische mittlere Bereich verstärkt und gleichzeitig das Trägheitsmoment erhöht. Auf die Darstellung einer weiteren Verstärkung des Trägers durch die Füllung des Innenraumes 23 wurde hier verzichtet.

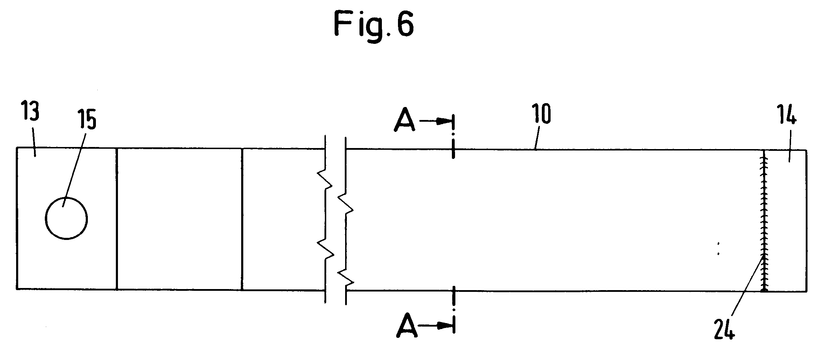

Figur 6 zeigt in einer Vorderansicht ein anderes Ausführungsbeispiel eines erfindungsgemäßen Aufprallträgers 10. Dieser weist im Unterschied zum Ausführungsbeispiel gemäß Figur 1 einen ovalen Querschnitt 11 (siehe Figur 7 bzw. Figur 8) auf, wobei auch in diesem Falle die Höhe 2 erheblich größer ist als die Tiefe 3. Dabei liegt die Tiefe 3 parallel zur Stoßrichtung 4 und die Höhe 2 senkrecht dazu. Auch bei diesem Beispiel wird ein Rohr als Ausgangsform verwendet und der ovale Querschnitt 11 durch Warm- oder Kaltpressen angeformt. Alternativ ist auch eine direkte Herstellung des ovalen Querschnittes durch Walzen möglich. Die Endenbereiche 13, 14 sind entsprechend der Art der Befestigung geformt. Der linke Endbereich 13 ist lappenartig plattgedrückt und weist eine Bohrung 15 zum Durchstecken einer hier nicht dargestellten Befestigungsschraube auf. Der rechte Endbereich 14 ist als massiver Deckel ausgebildet und mit dem Profil über eine Schweißnaht 24 verbunden. In diesen Deckel 14 wird beispielsweise eine Gewindebohrung angebracht, um den Aufprallträger 10 an der Fahrzeugtür befestigen zu können.

Einen alternativen Querschnitt 12 zeigt Figur 8, bei dem im Bereich der Stoßrichtung 4 der Querschnitt 12 einen geraden Abschnitt 24 aufweist. Damit wird bei unveränderter Bautiefe 3 der Abdeckbereich in der Fahrzeugtür vergrößert und somit der Flankenschutz verbessert.

Der Innenraum 25, 26 des Aufprallträgers 10 mit ovalen Querschnitten 11, 12 kann zur weiteren Verstärkung ebenfalls wie im Ausführungsbeispiel gemäß Fig. 1 mit einem geeigneten Mittel gefüllt sein.

## Patentansprüche

1. Aufprallträger für die Verstärkung der Tür eines Kraftfahrzeuges, insbesondere eines Personenkraftwagens, der als Hohlprofilteil beidends in der Fahrzeugtür festlegbar ist und der mindestens im mittleren Bereich einen Abschnitt aufweist, dessen Höhe immer größer ist als die Tiefe und der so in der Kraftfahrzugtür angeordnet ist, daß die Tiefe parallel zur Stoßrichtung liegt, wobei ausgehend von einem Rohr das Hohlprofilteil als ein einteiliges Stahlprofil (22) ausgebildet ist,
**dadurch gekennzeichnet**,
daß mindestens eine der nahezu senkrecht zur Stoßrichtung (4) liegenden Seiten (19) des Profiles eine dickere Wand aufweist als die in Stoßrichtung liegenden Seiten (17, 20), wobei die Seite (19) mit der dickeren Wand im Querschnitt eine nach innen gerichtete Kontur (22) aufweist.

2. Aufprallträger nach Anspruch 1,
**dadurch gekennzeichnet,**
daß der mittlere Bereich einen rechteckigen Querschnitt (1) aufweist, der sich nur über eine bestimmte Länge erstreckt und die Endbereiche des Profils einen rohrförmigen Querschnitt (5, 6) aufweisen.

3. Aufprallträger nach Anspruch 1,
**dadurch gekennzeichnet,**
daß der mittlere Bereich einen ovalen Querschnitt (11) aufweist.

4. Aufprallträger nach Anspruch 3,
**dadurch gekennzeichnet,**
daß im Bereich der Stoßrichtung der ovale Querschnitt (12) einen geraden Abschnitt (24) aufweist.

5. Aufprallträger nach den Ansprüchen 1 bis 4,
**dadurch gekennzeichnet**,
daß die Endbereiche zur Befestigung des Aufprallträgers in der Kraftfahrzeugtür lappenartig (13, 18) ausgebildet sind.

6. Aufprallträger nach einem der vorhergehenden Ansprüche,
**dadurch gekennzeichnet**,
daß der Innenraum (15, 23, 25, 26) des Hohlprofils über eine bestimmte Länge mit einem geeigneten Mittel (9) gefüllt ist.

## Claims

1. Impact beam for strengthening the door of a motor vehicle, in particular a passenger car, which can be fixed at both ends as a hollow sectional part in the vehicle door and which comprises at least in the central area a portion whose height is always greater than the depth and which is arranged in the vehicle door such that the depth is disposed parallel to the direction of impact, the hollow sectional part being formed as a one-part steel section (22) from a tube, characterised in that at least one of the sides (19) of the section which are disposed approximately perpendicularly to the direction of impact (4) has a thicker wall than the sides (17, 20) disposed in the direction of impact, the side (19) with the thicker wall having an inward pointing contour (22) in cross section.

2. Impact beam according to claim 1, characterised in that the central area has a rectangular cross section (1), which only extends over a certain length, and the end areas of the section have a tubular cross section (5, 6).

3. Impact beam according to claim 1, characterised in that the central area has an oval cross section (11).

4. Impact beam according to claim 3, characterised in that the oval cross section (12) has a straight portion (24) in the area of the direction of impact.

5. Impact beam according to claims 1 to 4, characterised in that the end areas are formed in the manner of lugs (13, 18) for the purpose of securing the impact beam in the motor vehicle door.

6. Impact beam according to one of the preceding claims, characterised in that the interior space (15, 23, 25, 26) of the hollow section is filled with a suitable medium (9) over a certain length.

## Revendications

1. Support de choc pour le renforcement de la porte d'un véhicule automobile, en particulier une voiture particulière, qui peut être fixé comme partie de profilé creux aux deux extrémités dans la porte du véhicule et qui présente au moins dans la zone centrale un tronçon, dont la hauteur est toujours plus importante que la profondeur et qui est agencé dans la porte du véhicule automobile de sorte que la profondeur est parallèle à la direction de choc, la partie de profilé creux étant réalisée comme profilé (22) en acier en une seule pièce à partir d'un tube,
caractérisé en ce qu'au moins l'une des faces (19) du profilé, situées à peu près perpendiculairement à la direction de choc (4), présente une paroi plus épaisse que les faces (17, 20) situées en direction de choc, la face (19) avec la paroi plus épaisse présentant en section transversale un contour (22) dirigé vers l'intérieur.

2. Support de choc selon la revendication 1,
caractérisé en ce que la zone centrale présente une section transversale rectangulaire (1) qui ne s'étend que sur une longueur déterminée, et les zones d'extrémité du profilé présentent une section transversale (5, 6) en forme de tube.

3. Support de choc selon la revendication 1,
caractérisé en ce que la zone centrale présente une section transversale ovale (11).

4. Support de choc selon la revendication 3,
caractérisé en ce que, dans la zone de la direction de choc, la section transversale ovale (12) présente un tronçon rectiligne (24).

5. Support de choc selon les revendications 1 à 4,
caractérisé en ce que les zones d'extrémité pour fixer le support de choc dans la porte du véhicule automobile sont réalisées sous forme de languettes (13, 18).

6. Support de choc selon l'une des revendications précédentes,
caractérisé en ce que l'espace interne (15, 23, 25, 26) du profilé creux est rempli, sur une longueur déterminée, d'un produit approprié (9).
